# EUROPÄISCHE PATENTSCHRIFT

(11) **EP 1 971 542 B1**
(45) Veröffentlichungstag und Bekanntmachung des Hinweises auf die Patenterteilung: **02.12.2009**
(21) Anmeldenummer: 06805430.3
(22) Anmeldetag: 13.10.2006
(51) Int. Cl.: B65G 53/52, F16L 57/06, F16L 43/00

(54) **ROHRSTRANG ZUM HYDRAULISCHEN ODER PNEUMATISCHEN TRANSPORT VON FESTSTOFFEN**
PIPING FOR THE HYDRAULIC OR PNEUMATIC TRANSPORT OF SOLIDS
LIGNE DE TUBES POUR TRANSPORT HYDRAULIQUE OU PNEUMATIQUE DE PRODUITS SOLIDES

(30) Priorität: 09.01.2006 DE 102006001315
(43) Veröffentlichungstag der Anmeldung: 24.09.2008
(73) Patentinhaber: Esser -Werke GmbH & Co. KG, 59581 Warstein (DE)
(72) Erfinder: ESSER, Alexander, 59581 Warstein (DE)
(74) Vertreter: Ksoll, Peter
(86) Internationale Anmeldenummer: PCT/DE2006/001822
(87) Internationale Veröffentlichungsnummer: WO 2007/079704

(56) Entgegenhaltungen:
- DE-A1- 4 010 556
- DE-C1- 10 032 074
- DE-C1- 19 500 952
- DE-C1- 19 500 953

## Beschreibung

Die Erfindung betrifft einen Rohrstrang zum hydraulischen oder pneumatischen Transport von Feststoffen gemäß den Merkmalen im Oberbegriff des Anspruchs 1.

Ein Rohrstrang dieser Gattung findet insbesondere als Betonverteilermast im Zusammenwirken mit einer Autobetonpumpe eine weit verbreitete Anwendung. Wesentliche Kriterien eines solchen Rohrstrangs sind seine Reichhöhe, seine Reichweite, die Faltungsart sowie insbesondere die Anzahl der Auslegerarme.

Die Erfahrungen der Praxis haben gezeigt, dass das Verschleißvolumen der in die Kupplungsflansche der gattungsprägenden Rohrbögen integrierten Schleißringe bei standardisiertem inneren Transportquerschnitt und dadurch ebenfalls vorgegebenen äußeren Konfigurationen und Abmessungen der Kupplungsflansche im Hinblick auf insbesondere die Ringbunde und die Kupplungsnuten nicht bei allen zu transportierenden bzw. transportierten Feststoffen ausreichend groß gehalten werden kann, um auch den Verschleiß zu verhindern, der sich einströmseitig von sich an Rohrbögen anschließenden geraden Rohrstücken bemerkbar macht.

Im Umfang der DE 195 00 953 C1 wurde zur Behebung dieses Problems der Vorschlag gemacht, den Schleißringen in den, bezogen auf die Rohrbögenachsen, den Krümmungsmittelpunkten der zwischen den endseitigen Kupplungsflanschen liegenden mittleren Rohrabschnitte abgewandten Bereichen größere Wanddicken als in den den Krümmungsmittelpunkten zugewandten Bereichen zu geben. Hierbei wurden die größeren Wanddicken der Schleißringe den Wanddicken der mittleren Rohrabschnitte in den angrenzenden Endabschnitten angepasst.

Dieser bekannte Vorschlag hat sich in der Praxis durchaus bewährt, weil die Standzeit der Rohrbögen im Vergleich zu den Rohrbögen beispielsweise der DE 40 10 556 A1 eine deutlich längere Standzeit aufweisen.

Gerade der praktische Einsatz der Rohrstränge als Betonverteilermaste hat aber auch gezeigt, dass Verschleißprobleme im Bereich von zwei aufeinander folgenden, insbesondere um 90° gegensinnig abgewinkelten, Rohrbögen sowie den sich daran anschließenden Rohrstücken auftraten. Eine derartige aufeinander folgende Konfiguration von Rohrbögen und Rohrstücken ist jedoch zum Einklappen eines Betonverteilermastes zwecks Verlagerung von einem zum anderen Einsatzort erforderlich. Die Umlenkung der Feststoffe um 2 x 90° hat zur Folge, dass aufgrund der durch die unterschiedliche Wanddicke bedingten Exzentrizität der Schleißringe beim Kuppeln zweier Rohrbögen der in der Wanddicke größte Umfangsbereich eines Schleißrings exakt auf den in der Wanddicke dünnsten Umfangsbereich des folgenden Rohrbogens stößt. Bei im Laufe der Betriebszeit zwangsläufig größer werdenden Spiel im Kupplungsbereich zweier Rohrbögen und/oder eines Rohrbogens sowie eines Rohrstücks infolge der vergleichsweise häufigen Drehungen der Schalenkupplungen und des damit verbundenen Verschleißes der Teile im Bereich der Schalenkupplungen werden die Spiele innerhalb der Kupplungsbereiche immer größer. Dieser Sachverhalt führt letztlich dazu, dass der Versatz der Wanddicke der Schleißringe im Übergangsbereich von einem Rohrbogen auf den folgenden Rohrbogen oder auf ein Rohrstück zunehmend größer wird und dann zu einem noch stärkeren Verschleiß führt.

Der Erfindung liegt - ausgehend vom Stand der Technik - die Aufgabe zugrunde, einen Rohrstrang zum hydraulischen oder pneumatischen Transport von Feststoffen zu schaffen, bei welchem auch im Bereich von aufeinander folgenden Rohrbögen, die untereinander sowie mit den angrenzenden Rohrstücken drehgelenkig kuppelbar sind, eine deutliche Standzeitverlängerung erreicht werden kann.

Die Lösung dieser Aufgabe wird in den Merkmalen des Anspruchs 1 gesehen.

Wichtig bei der erfindungsgemäßen Ausgestaltung ist der Sachverhalt, dass die in den Rohrstrang integrierten Rohrbögen nunmehr eine genau vorgegebene Transportrichtung erhalten. Diese kann zum Beispiel dadurch gewährleistet werden, dass die Rohrbögen mit einer entsprechenden Kennzeichnung, wie zum Beispiel einem Pfeil, versehen werden, der nicht ohne weiteres von den Rohrbögen entfernt werden kann.

Die Schleißringe in den Kupplungsflanschen der Rohrstücke sowie die Schleißringe in den in Transportrichtung der Feststoffe einströmseitigen Kupplungsflanschen der Rohrbögen weisen im Rahmen der Erfindung über den gesamten Umfang eine gleichmäßige Wanddicke auf. Hierbei erstrecken sich die Längsachsen der Schleißringe koaxial zu den Längsachsen der Rohrstücke und der Rohrbögenachsen. Hingegen besitzen die Schleißringe in den in Transportrichtung der Feststoffe ausströmseitigen Kupplungsflanschen der Rohrbögen, über ihren Umfang gesehen, unterschiedliche Wanddicken. Diese sind so gestaltet, dass die Wanddicken, bezogen auf die Rohrbögenachsen, in den den Krümmungsmittelpunkten der Rohrbögen abgewandten Umfangsabschnitten größer als in den den Krümmungsmittelpunkten näher liegenden Umfangsabschnitten bemessen sind. Folglich sind die Längsachsen der Innenquerschnitte der Schleißringe in den ausströmseitigen Kupplungsflanschen der Rohrbögen zu den Längsachsen der Außenquerschnitte der Schleißringe in Richtung zu den Krümmungsmittelpunkten versetzt angeordnet. Mit anderen Worten ausgedrückt heißt dies, dass in den einströmseitigen Kupplungsflanschen der Rohrbögen und der Rohrstücke zentrische Schleißringe und in den ausströmseitigen Kupplungsflanschen exzentrische Schleißringe vorhanden sind.

Diese erfindungsgemäßen Maßnahmen haben nunmehr in vorteilhafter Weise zur Folge, dass ausströmseitig eines Rohrbogens ein Schleißring mit über den Umfang unterschiedlichen Wanddicken auf einen Rohrbogen mit einem über den Umfang gesehen in der Wanddicke gleichmäßigen Schleißring stößt. Auf diese Weise können die einem hohen Verschleiß ausgesetzten Bereiche ausströmseitig eines Rohrbogens in jeder Relativposition weitgehend an die sich anschließenden Schleißbereiche eines Rohrbogens oder eines Rohrstücks angeglichen werden.

Das Ergebnis dieser Maßnahmen ist eine längere Standzeit des gesamten Rohrstrangs, die im Vergleich zu dem gattungsprägenden Rohrstrang um etwa 30 % höher angesetzt werden kann. Ein Betonverteilermast kann somit deutlich wirtschaftlicher eingesetzt werden.

Mit den Merkmalen des Anspruchs 2 wird der positive Effekt erreicht, dass die Schleißringe in den einströmseitigen Kupplungsflanschen quasi aus der Hauptverschleißzone heraus genommen werden. Der Verschleiß ist im Wesentlichen auf die Schleißringe in den ausströmseitigen Kupplungsflanschen beschränkt. Da in den den Krümmungsmittelpunkten der Rohrbögen näher liegenden Abschnitten der Schleißringe ohnehin ein merklich geringerer Verschleiß zu beobachten ist als in den dien Krümmungsmittelpunkten abgewandten Abschnitten, sind hier minimale innere Schleißkanten an den Schleißringen der einströmseitigen Kupplungsflansche kein Hindernis.

Ein einwandfreies Strömungsverhalten der Feststoffe wird durch die Merkmale des Anspruchs 3 gesichert, in dem die Längsachsen der Innenquerschnitte der Schleißringe in den ausströmseitigen Kupplungsflanschen der Rohrbögen zu den Längsachsen der Innenrohre der Rohrbögen koaxial ausgerichtet sind.

Das Verschleißverhalten der Schleißringe in den ausströmseitigen Kupplungsflanschen der Rohrbögen wird durch die Merkmale des Anspruchs 4 noch weiter verbessert.

Die Wanddicken der Schleißringe in den einströmseitigen Kupplungsflanschen der Rohrbögen gemäß Anspruch 5 sichert ausreichend große Wanddicken der äußeren Ringbunde mit den hier vorgesehenen Kupplungsnuten.

Aufgrund der Merkmale des Anspruchs 6 ist es möglich, die Außenrohre der Rohrbögen bis zu den Ringbunden der angrenzenden Kupplungsflansche zu ziehen, so dass dann gemäß den Merkmalen des Anspruchs 7 die Außenrohre der Rohrbögen mit den endseitigen Ringbunden ihrer Kupplungsflansche verschweißt werden können. Zu diesem Zweck ist es möglich, die Ringbunde mit geeigneten ringförmigen Aufnahmezentrierungen für die Außenrohre zu versehen.

Im Rahmen der Erfindung ist es ferner von Vorteil, wenn nach Anspruch 8 die Außenrohre der Rohrbögen aus Stahlblech und die Innenrohre aus Stahlguss gebildet sind, wobei die Wanddicken der Innenrohre größer als die Wanddicken der Außenrohre bemessen sind.

Die Innenrohre der Rohrbögen können dann einwandfrei in die Außenrohren eingebettet werden, wenn gemäß den Merkmalen des Anspruchs 9 die Innenrohre der Rohrbögen mit radialem Abstand zu den Außenrohren angeordnet sind, wobei die Spalte zwischen den Innenrohren und den Außenrohren mit Beton verfüllt sind.

Aufgrund der Merkmale des Anspruchs 10 übergreifen die Ringbunde der Kupplungsflansche der Rohrstücke die Außenrohre der Rohrstücke. Die Ringbunde werden dann vorteilhaft durch eine Kehlnaht mit den äußeren Oberflächen der Außenrohre verschweißt.

Es ist ferner von Vorteil, dass entsprechend Anspruch 11 die Wanddicken der Schleißringe in den Kupplungsflanschen der Rohrstücke größer als die Wanddicken der aus Stahlblech bestehenden Innenrohre der Rohrstücke bemessen sind.

In diesem Zusammenhang entsprechen gemäß Anspruch 12 die addierten Wanddicken der Innenrohre und Außenrohre der Rohrstücke etwa den Wanddicken der Schleißringe in den Kupplungsflanschen der Rohrstücke.

Die Erfindung ist nachfolgend anhand eines in den Zeichnungen veranschaulichten Ausführungsbeispiels näher erläutert. Es zeigen:
- Figur 1: im vertikalen Längsschnitt einen Längenabschnitt eines Rohrstrangs;
- Figur 2: in vergrößertem Maßstab den Ausschnitt II der Figur 1 und
- Figur 3: ebenfalls in vergrößertem Maßstab den Ausschnitt III der Figur 1.

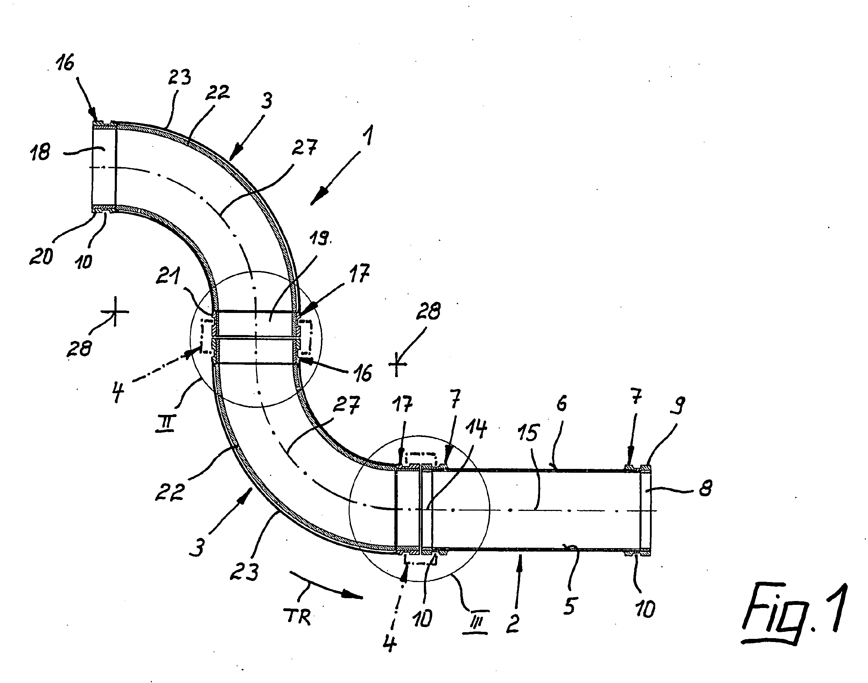

In der Figur 1 ist mit 1 ein Längenabschnitt eines Rohrstrangs zum hydraulischen oder pneumatischen Transport von Feststoffen, wie beispielsweise Beton, bezeichnet. Ein derartiger Rohrstrang 1 gelangt zum Beispiel im Zusammenhang mit einer Autobetonpumpe als zusammen klappbarer Betonverteilermast zum praktischen Einsatz. Der Rohrstrang 1 beisitzt eine vorgegebene Transportrichtung, die durch den Pfeil TR gekennzeichnet ist.

Der Rohrstrang 1, welcher Längen bis über 60 m erreichen kann, setzt sich aus geraden Rohrstücken 2 sowie Rohrbögen 3 zusammen, die eine 90° Krümmung aufweisen. Eine derartige Konfiguration der Rohrbögen 3 erlaubt es, zwei aufeinander folgende Rohrbögen 3 oder einen Rohrbogen 3 sowie ein Rohrstück 2 nicht nur mit Hilfe von lediglich schematisch angedeuteten Schalenkupplungen 4 zu verbinden, sondern gestattet auch Reiativverdrehungen der Rohrstücke 2 und der Rohrbögen 3 innerhalb der Schalenkupplungen 4. Auf diese Weise kann ein langer Rohrstrang 1 so zusammengefaltet werden, dass er auf einem fahrbaren Untersatz von einem Einsatzort zum anderen verlagerbar ist.

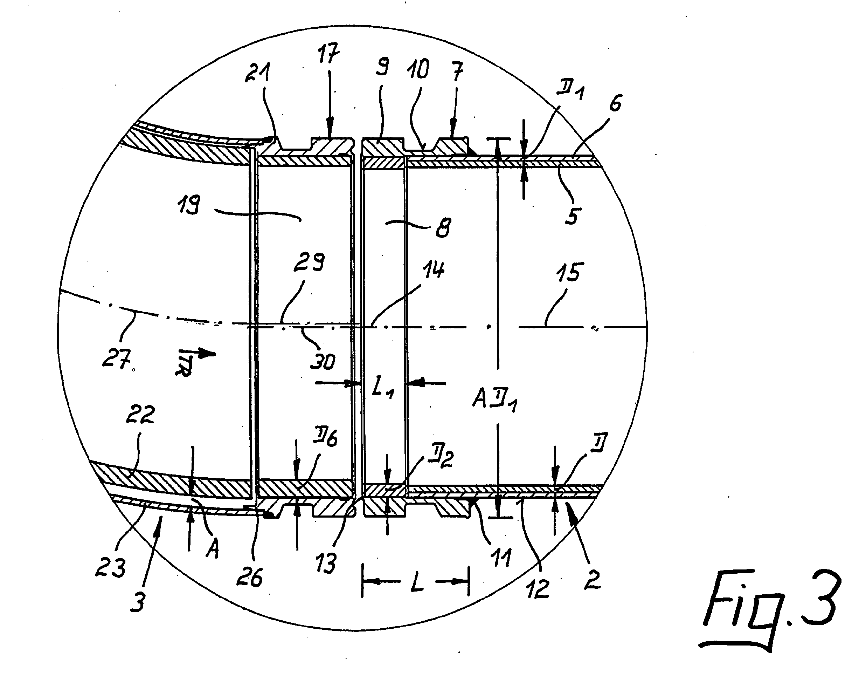

Die Rohrstücke 2 setzen sich (s. Fig. 1 und 3) aus einem Innenrohr 5 aus Stahlblech, einem Außenrohr 6 aus Stahlblech, sowie endseitigen Kupplungsflanschen 7 zusammen. Die Wanddicke D der Innenrohre 5 ist größer als die Wanddicke D1 der Außenrohre 6 bemessen.

Die Kupplungsflansche 7 bestehen aus inneren Schleißringen 8 sowie äußeren Ringbunden 9 mit Kupplungsnuten 10. Die axiale Länge L der Ringbunde 9 ist größer als die axiale Länge L1 der Schleißringe 8 bemessen. Auf diese Weise fassen die Innenrohre 5 und Außenrohre 6 in die Ringbunde 9 ein. Die Ringbunde 9 werden durch Kehlnähte 11 mit den äußeren Oberflächen 12 der Außenrohre 6 verschweißt.

Die Lage der Schleißringe 8 in den Kupplungsflanschen 7 wird durch stirnseitige Nasen 13 an den Ringbunden 9 gesichert.

Es ist ferner den Figuren 1 und 3 zu entnehmen, dass die Längsachsen 14 der Schleißringe 8 in den Kupplungsflanschen 7 mit den Längsachsen 15 der Rohrstücke 2 koaxial verlaufen.

Schließlich zeigt noch die Figur 3, dass die über den gesamten Umfang gleichmäßigen Wanddicken D2 der Schleißringe 8 in den Kupplungsflanschen 7 der Rohrstücke 2 größer als die Wanddicken D der Innenrohre 5 bemessen sind, wobei die addierten Wanddicken D und D1 der Innenrohre 5 und Außenrohre 6 etwa den Wanddicken D2 der Schleißringe 8 entsprechen.

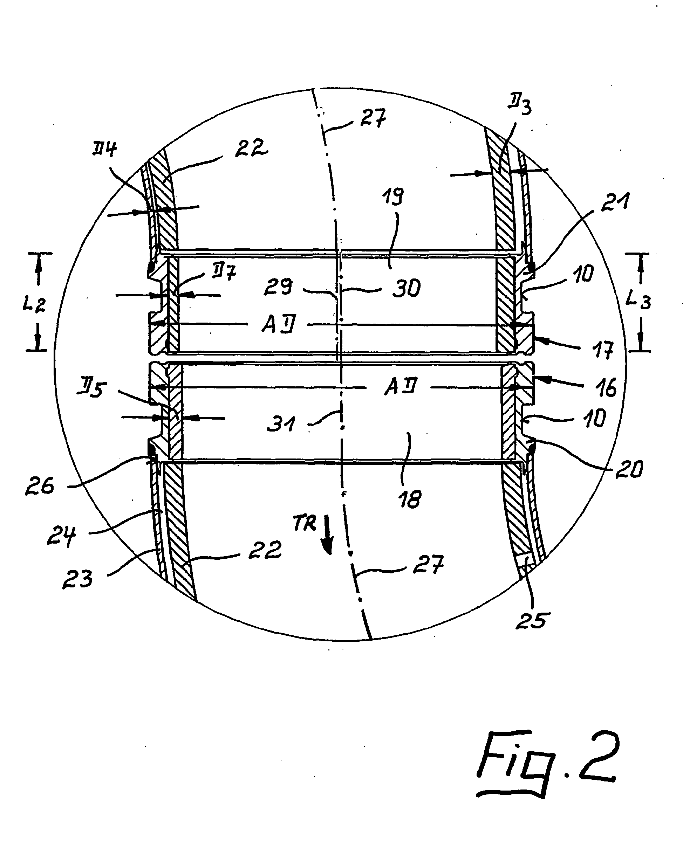

Insbesondere aus den Figuren 2 und 3 ist zu erkennen, dass die einströmseitigen Kupplungsflansche 16 der Rohrbögen 3 und die ausströmseitigen Kupplungsflansche 17 innere Schleißringe 18, 19 und äußere Ringbunde 20, 21 mit Kupplungsnuten 10 besitzen. Die axiale Länge L3 der Schließringe 18, 19 ist annähernd gleich der axialen Länge L2 der Ringbunde 20, 21 bemessen. Die Außendurchmesser AD der Ringbunde 20, 21 an den Kupplungsflanschen 16, 17 der Rohrbögen 3 entsprechen den Außendurchmessern AD1 der Ringbunde 9 der Rohrstücke 2.

Zwischen den Kupplungsflanschen 16, 17 der Rohrbögen 3 erstrecken sich Innenrohre 22 aus Stahlguss und Außenrohre 23 aus Stahlblech. Die Wanddicken D3 der Innenrohre 22 sind größer als die Wanddicken D4 der Außenrohre 23 bemessen. Da die Außenrohre 23 mit radialem Abstand A zu den Innenrohren 22 angeordnet sind, wird zwischen den Innenrohren 22 und den Außenrohren 23 ein Spalt 24 gebildet, der im Betrieb des Rohrstrangs 1 mit einem Feststoff, wie zum Beispiel Beton, verfüllt wird. Zu diesem Zweck sind in den Innenrohren 22 der Rohrbögen 3 radial gerichtete Durchbrechungen 25 vorgesehen, über die die Feststoffe in die Spalte 24 eindringen können.

Zur Fixierung der Außenrohre 23 besitzen die Ringbunde 20, 21 der Kupplungsflansche 16, 17 ringförmige Zentrierungen 26. In diesen Bereichen werden die Außenrohre 23 mit den Ringbunden 20, 21 verschweißt.

Die Schleißringe 8 in den Kupplungsflanschen 7 der Rohrstücke 2 sowie die Schleißringe 18 in den in Transportrichtung TR der Feststoffe einströmseitigen Kupplungsflanschen 16 der Rohrbögen 3 weisen über den gesamten Umfang eine gleichmäßige Wanddicke D2 bwz. D5 auf. Die Längsachsen 31 der Schleißringe 18 erstrecken sich koaxial zu den Rohrbögenachsen 27 (Fig. 2).

Die Schleißringe 19 in den in Transportrichtung TR ausströmseitigen Kupplungsflanschen 17 der Rohrbögen 3 besitzen über ihren Umfang gesehen unterschiedliche Wanddicken. Diese sind, bezogen auf die Rohrbögenachsen 27, in den den Krümmungsmittelpunkten 28 der Rohrbögen 3 abgewandten Umfangsabschnitten größer als in den den Krümmungstnittelpunkten 28 näher liegenden Umfangsabschnitten bemessen. Die Längsachsen 29 der Innenquerschnitte der Schleißringe 19 in den ausströmseitigen Kupplungsflanschen 17 der Rohrbögen 3 sind zu den Längsachsen 30 der Außenquerschnitte der Schleißringe 19 in Richtung zu den Krümmungsmittelpunkten 28 exzentrisch versetzt angeordnet.

Die größten Wanddicken D6 der Schleißringe 19 in den ausströmseitigen Kupplungsflanschen 17 der Rohrbögen 3 sind größer und die kleinsten Wanddicken D7 kleiner als die Wanddicken D2 der Schleißringe 8 in den Kupplungsflanschen 7 der Rohrstücke 2 sowie D5 der Schleißringe 18 in den einströmseitigen Kupplungsflanschen 16 der Rohrbögen 3 bemessen. Hierbei sind die Längsachsen 29 der Innenquerschnitte der Schleißringe 19 in den ausströmseitigen Kupplungsflanschen 17 zu den Längsachsen 27 der Innenrohre 21 der Rohrbögen 3 koaxial ausgerichtet.

Des Weiteren zeigen die Figuren 2 und 3, dass die größten Wanddicken D6 der Schleißringe 19 in den ausströmseitigen Kupplungsflanschen 17 etwa den Wanddicken D3 der Innenrohre 22 der Rohrbögen 3 entsprechen. Andererseits sind die Wanddicken D5 der Schleißringe 18 in den einströmseitigen Kupplungsflanschen 16 der Rohrbögen 3 kleiner als die Wanddicken D3 der Innenrohre 22 der Rohrbögen 3 bemessen.

### Bezugszeichen:

- 1 -: Rohrstrang
- 2 -: Rohrstücke
- 3 -: Rohrbögen
- 4 -: Schalenkupplungen
- 5 -: Innenrohre v. 2
- 6 -: Außenrohre v. 2
- 7 -: Kupplungsflansche v. 2
- 8 -: Schleißringe in 7
- 9 -: Ringbunde v. 7
- 10 -: Kupplungsnuten in 9
- 11 -: Kehlnähte
- 12 -: äußere Oberflächen v. 6
- 13 -: Nasen an 9
- 14 -: Längsachsen v. 8
- 15 -: Längsachsen v. 2
- 16 -: einströmseitige Kupplungsflansche v. 3
- 17 -: ausströmseitige Kupplungsflansche v. 3
- 18 -: Schleißringe in 16
- 19 -: Schleißringe in 18
- 20 -: Ringbunde an 16
- 21 -: Ringbunde an 17
- 22 -: Innenrohre v. 3
- 23 -: Außenrohre v. 3
- 24 -: Spalt zw. 22 u. 23
- 25 -: Durchbrechungen in 22
- 26 -: Zentrierungen an 20, 21
- 27 -: Rohrbögenachsen
- 28 -: Krümmungsmittelpunkte v. 3
- 29 -: Längsachsen der Innenquerschnitte v. 19
- 30 -: Längsachsen der Außenquerschnitte v. 19
- 31 -: Längsachsen v. 18
- A -: Abstand v. 22 u. 23
- AD -: Außendurchmesser v. 20, 21
- AD1 -: Außendurchmesser v. 9
- D -: Wanddicke v. 5
- D1 -: Wanddicke v. 6
- D2 -: Wanddicke v. 8
- D3: Wanddicke v. 22
- D4 -: Wanddicke v. 23
- D5 -: Wanddicke v. 18
- D6 -: größte Wanddicke v. 19
- D7 -: kleinste Wanddicke v. 19
- L -: Länge v. 9
- L1 -: Länge v. 8
- L2 -: Länge v. 20, 21
- L3 -: Länge v. 18, 19
- TR -: Transportrichtung (Pfeil)

## Patentansprüche

1. Rohrstrang zum hydraulischen oder pneumatischen Transport von Feststoffen, der gerade Rohrstücke (2) und gekrümmte Rohrbögen (3) aufweist, die jeweils aus einem Innenrohr (5; 22), einem Außenrohr (6; 23) und endseitigen doppellagigen Kupplungsflanschen (7; 16, 17) aus inneren Schleißringen (8; 18, 19) und äußeren Ringbunden (9; 20, 21) mit Kupplungsnuten (10) bestehen, wobei abschnittsweise aufeinander folgende Rohrstücke (2) und/oder Rohrbögen (3) durch als Drehgelenke und Rohrverbinder wirksame Schalenkupplungen (4) lösbar miteinander gekuppelt sind, **gekennzeichnet durch** folgende Merkmale:
a) die Schleißringe (8) in den Kupplungsflanschen (7) der Rohrstücke (2) sowie die Schleißringe (18) in den in Transportrichtung (TR) der Feststoffe einströmseitigen Kupplungsflanschen (16) der Rohrbögen (3) weisen über den gesamten Umfang eine gleichmäßige Wanddicke (D2; D5) auf;
b) die Längsachsen (14; 31) der Schleißringe (8; 18) erstrecken sich koaxial zu den Längsachsen (15; 27) der Rohrstücke (2) und der Rohrbögen (3);
c) die Schleißringe (19) in den in Transportrichtung (TR) der Feststoffe ausströmseitigen Kupplungsflanschen (17) der Rohrbögen (3) besitzen über ihren Umfang gesehen unterschiedliche Wanddicken (D6, D7);
d) die Wanddicken der Schleißringe (19) der ausströmseitigen Kupplungsflansche (17) der Rohrbögen (3) sind, bezogen auf die Rohrbögenachsen (27), in den den Krümmungsmittelpunkten (28) der Rohrbögen (3) abgewandten Umfangsabschnitten größer als in den den Krümmungsmittelpunkten (28) näher liegenden Umfangsabschnitten bemessen;
e) die Längsachsen (29) der Innenquerschnitte der Schleißringe (19) in den ausströmseitigen Kupplungsflanschen (17) der Rohrbögen (3) sind zu den Längsachsen (30) der Außenquerschnitte der Schleißringe (19) in Richtung zu den Krümmungsmittelpunkten (28) exzentrisch versetzt angeordnet.

2. Rohrstrang nach Anspruch 1, **dadurch gekennzeichnet, dass** die größten Wanddicken (D6) der Schleißringe (19) in den ausströmseitigen Kupplungsflanschen (17) der Rohrbögen (3) größer und die kleinsten Wanddicken (D7) kleiner als die Wanddicken (D2; D5) der Schleißringe (8) in den Kupplungsflanschen (7) der Rohrstücke (2) sowie der Schleißringe (18) in den einströmseitigen Kupplungsflanschen (16) der Rohrbögen (3) bemessen sind.

3. Rohrstrang nach Anspruch 1 oder 2, **dadurch gekennzeichnet, dass** die Längsachsen (29) der Innenquerschnitte der Schleißringe (19) in den ausströmseitigen Kupplungsflanschen (17) der Rohrbögen (3) zu den Längsachsen (27) der Innenrohre (22) der Rohrbögen (3) koaxial ausgerichtet sind.

4. Rohrstrang nach einem der Ansprüche 1 bis 3, **dadurch gekennzeichnet, dass** die größten Wanddicken (D6) der Schleißringe (19) in den ausströmseitigen Kupplungsflanschen (17) der Rohrbögen (3) etwa den Wanddicken (D3) der Innenrohre (22) der Rohrbögen (3) entsprechen.

5. Rohrstrang nach einem der Ansprüche 1 bis 4, **dadurch gekennzeichnet, dass** die Wanddicken (D5) der Schleißringe (18) in den einströmseitigen Kupplungsflanschen (16) der Rohrbögen (3) kleiner als die Wanddicken (D3) der Innenrohre (22) der Rohrbögen (3) bemessen sind.

6. Rohrstrang nach einem der Ansprüche 1 bis 5, **dadurch gekennzeichnet, dass** die axialen Längen (L2) der Ringbunde (20, 21) der Kupplungsflansche (16, 17) der Rohrbögen (3) etwa den axialen Längen (L3) der in die Ringbunde (20, 21) eingebetteten Schleißringe (18, 19) entsprechen.

7. Rohrstrang nach einem der Ansprüche 1 bis 6, **dadurch gekennzeichnet, dass** die Außenrohre (23) der Rohrbögen (3) mit den endseitigen Ringbunden (20, 21) ihrer Kupplungsflansche (16, 17) verschweißt sind.

8. Rohrstrang nach einem der Ansprüche 1 bis 7, **dadurch gekennzeichnet, dass** die Außenrohre (23) der Rohrbögen (3) aus Stahlblech und die Innenrohre (22) aus Stahlguss gebildet sind, wobei die Wanddicken (D3) der Innenrohre (22) größer als die Wanddicken (D4) der Außenrohre (23) bemessen sind.

9. Rohrstrang nach einem der Ansprüche 1 bis 8, **dadurch gekennzeichnet, dass** die Innenrohre (22) der Rohrbögen (3) mit radialem Abstand (A) zu den Außenrohren (23) angeordnet sind, wobei die Spalte (24) zwischen den Innenrohren (22) und den Außenrohren (23) mit Feststoffen, wie z.B. Beton, verfüllt sind.

10. Rohrstrang nach einem der Ansprüche 1 bis 9, **dadurch gekennzeichnet, dass** die Schleißringe (8) in den Kupplungsflanschen (7) der Rohrstücke (2) etwa halb so lang wie die zugehörigen Ringbunde (9) bemessen sind, wobei die Ringbunde (9) mit den äußeren Oberflächen (12) der aus Stahlblech gebildeten Außenrohre (6) der Rohrstücke (2) verschweißt sind.

11. Rohrstrang nach einem der Ansprüche 1 bis 10, **dadurch gekennzeichnet, dass** die Wanddicken (D2) der Schleißringe (8) in den Kupplungsflanschen (7) der Rohrstücke (2) größer als die Wanddicken (D) der aus Stahlblech bestehenden Innenrohre (5) der Rohrstücke (2) bemessen sind.

12. Rohrstrang nach einem der Ansprüche 1 bis 11, **dadurch gekennzeichnet, dass** die addierten Wanddicken (D, D1) der Innenrohre (5) und Außenrohre (6) der Rohrstücke (2) etwa den Wanddicken (D2) der Schleißringe (8) in den Kupplungsflanschen (7) der Rohrstücke (2) entsprechen.

## Claims

1. Piping for hydraulic or pneumatic transportation of solid materials, comprising straight piping sections (2) and piping bends (3), each comprising an inner pipe (5; 22), an outer pipe (6; 23) and, at the ends, double-layered coupling flanges (7; 16, 17) comprising inner wear rings (8; 18, 19) and outer annular collars (9; 20, 21) having coupling grooves (10), wherein piping sections (2) and/or piping bends (3) following one another in sections are releasably connected to one another by means of clamp couplings (4) which are effective as pivot joints and pipe connectors, **characterised by** the following features:
a) the wear rings (8) in the coupling flanges (7) of the piping sections (2) and the wear rings (18) in the coupling flanges (16) of the piping bends (3) on the inflow side in the transport direction (TR) of the solid materials have an even wall thickness (D2; D5) over the entire periphery;
b) the longitudinal axes (14; 31) of the wear rings (8; 18) extend coaxially with the longitudinal axes (15; 27) of the piping sections (2) and the piping bends (3);
c) the wear rings (19) in the coupling flanges (17) of the piping bends (3) on the outflow side in the transport direction (TR) of the solid materials have different wall thicknesses (D6; D7) seen over the periphery thereof;
d) the wall thicknesses of the wear rings (19) of the coupling flanges (17) of the piping bends (3) on the outflow side are larger, relative to the piping bend axes (27), in the peripheral sections facing away from the centres of curvature (28) of the piping bends (3) than in the peripheral sections lying closer to the centres of curvature (28);
e) the longitudinal axes (29) of the internal cross-sections of the wear rings (19) in the coupling flanges (17) of the piping bends (3) on the outflow side are arranged eccentrically offset relative to the longitudinal axes (30) of the external cross-sections of the wear rings (19) in the direction toward the centres of curvature (28).

2. Piping according to claim 1, **characterised in that** the greatest wall thicknesses (D6) of the wear rings (19) in the coupling flanges (17) of the piping bends (3) on the outflow side are greater, and the smallest wall thicknesses (D7) are smaller than the wall thicknesses (D2; D5) of the wear rings (8) in the coupling flanges (7) of the piping sections (2) and of the wear rings (18) in the coupling flanges (16) of the piping bends (3) on the inflow side.

3. Piping according to claim 1 or 2, **characterised in that** the longitudinal axes (29) of the internal cross-sections of the wear rings (19) in the coupling flanges (17) of the piping bends (3) on the outflow side are oriented coaxially with the longitudinal axes (27) of the inner pipes (22) of the piping bends (3).

4. Piping according to one of the claims 1 to 3, **characterised in that** the greatest wall thicknesses (D6) of the wear rings (19) in the coupling flanges (17) of the piping bends (3) on the outflow side approximate to the wall thicknesses (D3) of the inner pipes (22) of the piping bends (3).

5. Piping according to one of the claims 1 to 4, **characterised in that** the wall thicknesses (D5) of the wear rings (18) in the coupling flanges (16) of the piping bends (3) on the inflow side are smaller than the wall thicknesses (D3) of the inner pipes (22) of the piping bends (3).

6. Piping according to one of the claims 1 to 5, **characterised in that** the axial lengths (L2) of the annular collars (20, 21) of the coupling flanges (16, 17) of the piping bends (3) approximate to the axial lengths (L3) of the wear rings (18, 19) embedded in the annular collars (20, 21).

7. Piping according to one of the claims 1 to 6, **characterised in that** the outer pipes (23) of the piping bends (3) are welded to the annular collars (20, 21) on the end side of the coupling flanges (16, 17) thereof.

8. Piping according to one of the claims 1 to 7, **characterised in that** the outer pipes (23) of the piping bends (3) are made from steel sheet and the inner pipes (22) are made from cast steel, wherein the wall thicknesses (D3) of the inner pipes (22) are greater than the wall thicknesses (D4) of the outer pipes (23).

9. Piping according to one of the claims 1 to 8, **characterised in that** the inner pipes (22) of the piping bends (3) are arranged at a radial spacing (A) from the outer pipes (23), wherein the gap (24) between the inner pipes (22) and the outer pipes (23) is filled with solid materials, for example, concrete.

10. Piping according to one of the claims 1 to 9, **characterised in that** the wear rings (8) in the coupling flanges (7) of the piping sections (2) are approximately half as long as the associated annular collars (9), wherein the annular collars (9) are welded to the outer surfaces (12) of the outer pipes (6) of the piping sections (2) made from steel sheet.

11. Piping according to one of the claims 1 to 10, **characterised in that** the wall thicknesses (D2) of the wear rings (8) in the coupling flanges (7) of the piping sections (2) are greater than the wall thicknesses (D) of the inner pipes (5) of the piping sections (2) made from steel sheet.

12. Piping according to one of the claims 1 to 11, **characterised in that** the summed wall thicknesses (D, D1) of the inner pipes (5) and outer pipes (6) of the piping sections (2) approximate to the wall thicknesses (D2) of the wear rings (8) in the coupling flanges (7) of the piping sections (2).

## Revendications

1. Ligne de tubes pour le transport hydraulique pneumatique de matières solides, qui comprend des morceaux de tube rectilignes (2) et des coudes de tube cintrés (3), qui sont respectivement constitués d'un tube intérieur (5 ; 22), d'un tube extérieur (6 ; 23) et de brides d'accouplement à deux couches (7 ; 16, 17) du côté terminal formées de bagues d'usure intérieures (8 ; 18 ; 19) et de collerettes annulaires extérieures (9 ; 20, 21) avec des gorges d'accouplement (10), dans laquelle les morceaux de tube (2) et/ou les coudes de tube (3) qui se suivent mutuellement par tronçon sont couplés les uns aux autres de façon détachable par des accouplements à coque (4) actifs à titre d'articulations rotatives et de raccords de tube,
**caractérisée par** les éléments suivants :
a) les bagues d'usure (8) dans les brides d'accouplement (7) des morceaux de tube (2) ainsi que les bagues d'usure (18) dans les brides d'accouplement (16), des coudes de tube (3), situées du côté entrée dans la direction de transport (TR) des matières solides présentent sur la totalité de la périphérie une épaisseur de paroi régulière (D2 ; D5) ;
b) les axes longitudinaux (14 ; 31) des bagues d'usure (8 ; 18) s'étendent coaxialement aux axes longitudinaux (15 ; 27) des morceaux de tube (2) et des coudes de tube (3) ;
c) les bagues d'usure (19) dans les brides d'accouplement (17), des coudes de tube (3), du côté sortie dans la direction de transport (TR) des matières solides possèdent des épaisseurs de paroi différentes (D6, D7), vues sur leur périphérie ;
d) les épaisseurs de paroi des bagues d'usure (19) des brides d'accouplement (17) du côté sortie des coudes de tube (3) sont, par référence aux axes des coudes de tube (27), plus grandes dans les tronçons de périphérie détournés des centres de courbure (28) des coudes de tube (3) que dans les tronçons de périphérie situés plus près des centres de courbure (28) ;
e) les axes longitudinaux (29) des sections intérieures des bagues d'usure (19), dans les brides d'accouplement (17) des coudes de tube (3) du côté sortie sont agencés avec un décalage excentrique par rapport aux axes longitudinaux (31) des sections extérieures des bagues d'usure (19), en direction des centres de courbure (28).

2. Ligne de tubes selon la revendication 1, **caractérisée en ce que** les plus fortes épaisseurs de paroi (D6) des bagues d'usure (19) dans les brides accouplement (17) du côté sortie des coudes de tube (3) sont plus fortes, et les plus petites épaisseurs de paroi (D7) sont plus petites que les épaisseurs de paroi (D2 ; D5) des bagues d'usure (8) dans les brides d'accouplement (7) des morceaux de tube (2) ainsi que des bagues d'usure (18) dans les brides d'accouplement (16) du côté entrée des coudes de tube (3).

3. Ligne de tubes selon la revendication 1 ou 2, **caractérisée en ce que** les axes longitudinaux (29) des sections intérieures des bagues d'usure (19) dans les brides d'accouplement (17) du côté sortie des coudes de tube (3) sont orientés coaxialement aux axes longitudinaux (27) des tubes intérieurs (22) des coudes de tube (3).

4. Ligne de tubes selon l'une des revendications 1 à 3, **caractérisée en ce que** les plus fortes épaisseurs de paroi (D6) des bagues d'usure (19) dans les brides d'accouplement (17) du côté sortie des coudes de tube (3) correspondent approximativement aux épaisseurs de paroi (D3) des tubes intérieurs (22) des coudes de tube (3).

5. Ligne de tubes selon l'une des revendications 1 à 4, **caractérisée en ce que** les épaisseurs de paroi (D5) des bagues d'usure (18) dans les brides d'accouplement (16) du côté entrée des coudes de tube (3) sont plus petites que les épaisseurs de paroi (D3) des tubes intérieurs (22) des coudes de tube (3).

6. Ligne de tubes selon l'une des revendications 1 à 5, **caractérisée en ce que** les longueurs axiales (L2) des collerettes annulaires (20, 21) des brides d'accouplement (16, 17) des coudes de tube (3) correspondent approximativement aux longueurs axiales (L3) des bagues d'usure (18, 19) noyées dans les collerettes annulaires (20, 21).

7. Ligne de tubes selon l'une des revendications 1 à 6, **caractérisée en ce que** les tubes extérieurs (23) des coudes de tube (3) sont soudés avec les collerettes annulaires terminales (20, 21) de leurs brides d'accouplement (16, 17).

8. Ligne de tubes selon l'une des revendications 1 à 7, **caractérisée en ce que** les tubes extérieurs (23) des coudes de tube (3) sont formés en tôle d'acier et les tubes intérieurs (22) sont formés en fonte d'acier, et les épaisseurs de paroi (D3) des tubes intérieurs (22) sont plus fortes que les épaisseurs de paroi (D4) des tubes extérieurs (23).

9. Ligne de tubes selon l'une des revendications 1 à 8, **caractérisée en ce que** les tubes intérieurs (22) des coudes de tube (3) sont agencés avec une distance radiale (A) vis-à-vis des tubes extérieurs (23), et les intervalles (24) entre les tubes intérieurs (22) et les tubes extérieurs (23) sont remplis de matières solides, comme par exemple du béton.

10. Ligne de tubes selon l'une des revendications 1 à 9, **caractérisée en ce que** les bagues d'usure (8) dans les brides d'accouplement (7) des morceaux de tube (2) ont environ la moitié de la longueur des collerettes annulaires associées (9), lesdites collerettes annulaires (9) étant soudées avec les surfaces extérieures (12) des tubes extérieurs (6), formés en tôle d'acier, des morceaux de tube (2).

11. Ligne de tubes selon l'une des revendications 1 à 10, **caractérisée en ce que** les épaisseurs de paroi (D2) des bagues d'usure (8) dans les brides d'accouplement (7) des morceaux de tube (2) sont plus fortes que les épaisseurs de paroi (D) des tubes intérieurs (5), formés en tôle d'acier, des morceaux de tube (2).

12. Ligne de tubes selon l'une des revendications 1 à 11, **caractérisée en ce que** les épaisseurs de paroi (D, D1) des tubes intérieurs (5) et des tubes extérieurs (6) des morceaux de tube (2) additionnées correspondent approximativement aux épaisseurs de paroi (D2) des bagues d'usure (8) dans les brides d'accouplement (7) des morceaux de tube (2).
